Europäisches Patentamt

European Patent Office

Office européen des brevets

(11) Veröffentlichungsnummer: **0 329 125**

**A2**

(12) **EUROPÄISCHE PATENTANMELDUNG**

(21) Anmeldenummer: 89102628.8

(22) Anmeldetag: 16.02.89

(51) Int. Cl.⁴: **G01D 3/08**

(30) Priorität: 18.02.88 DE 3804969

(43) Veröffentlichungstag der Anmeldung:
23.08.89 Patentblatt 89/34

(84) Benannte Vertragsstaaten:
AT CH DE ES FR GB IT LI NL SE

(71) Anmelder: **DR. JOHANNES HEIDENHAIN GMBH**
**Dr.-Johannes-Heidenhain-Strasse 5 Postfach 1260**
**D-8225 Traunreut(DE)**

(72) Erfinder: **Lengenfelder, Hans, Dipl.-Ing. (FH)**
**Ahamer Strasse 69**
**D-8260 Mühldorf(DE)**

(54) **Schaltungsanordnung zur Erkennung von Störsignalen.**

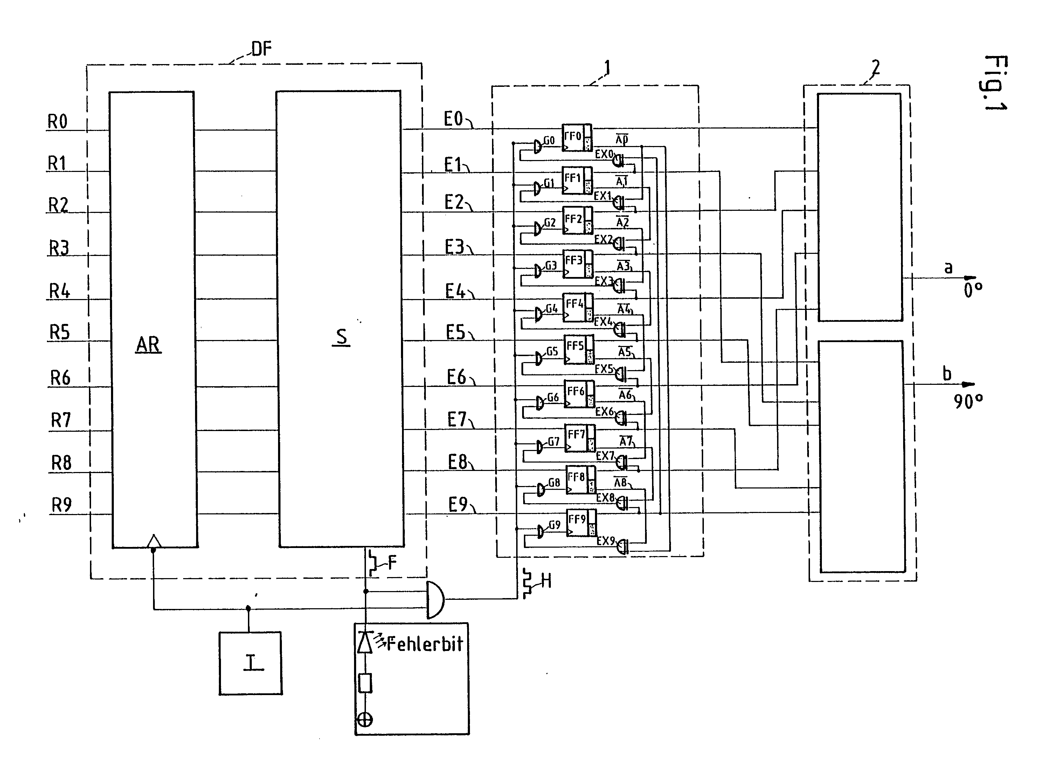

(57) Die Schaltungsanordnung gemäß Figur 1 weist zur Synchronisierung von Rechtecksignalfolgen (RO... Rk) eine Synchronisierungs-Baueinheit (1) auf. Durch Störimpulse, die im Vorfeld der Synchronisierungs-Baueinheit (1) auftreten können, kann es zu fehlerhaften Ausgangssignalen kommen. Ein digital arbeitendes Filter (DF), welches der Synchronisierungs-Baueinheit (1) vorgeschaltet ist, verhindert, daß fehlerhafte Signalkombinationen in Form von unzulässigen Bit-Mustern an die Eingänge der Synchronisierungs-Baueinheit (1) gelangen. Das digital arbeitende Filter (DF) besteht aus einem getakteten Adreßregister (AR) und einem Speicher (S), der für jedes mögliche Bit-Muster der Rechtecksignalfolgen (RO...Rk) eine Speicherzelle (Si) aufweist. Die einzelne Speicherzelle (Si), die entsprechend dem momentanen Bit-Muster adressiert wird, enthält die Information, ob das momentane Bit-Muster zulässig oder unzulässig ist.

EP 0 329 125 A2

Fig.1

DF

R0
R1
R2
R3
R4
R5
R6
R7
R8
R9

AR

S

I

F

Fehlerbit

H

E0
E1
E2
E3
E4
E5
E6
E7
E8
E9

G0 FF0 $\overline{A0}$ EX0
G1 FF1 $\overline{A1}$ EX1
G2 FF2 $\overline{A2}$ EX2
G3 FF3 $\overline{A3}$ EX3
G4 FF4 $\overline{A4}$ EX4
G5 FF5 $\overline{A5}$ EX5
G6 FF6 $\overline{A6}$ EX6
G7 FF7 $\overline{A7}$ EX7
G8 FF8 $\overline{A8}$ EX8
G9 FF9 $\overline{A9}$ EX9

1

2

a
0°

b
90°

## Schaltungsanordnung zur Erkennung von Störsignalen

Die Erfindung bezieht sich auf eine Schaltung gemäß dem Oberbegriff des Anspruchs 1.

Derartige Schaltungsanordnungen werden insbesondere bei inkrementalen Positionsmeßeinrichtungen mit Unterteilungsschaltungen benötigt. In der DE-C2-35 23 551 ist beschrieben, wie bei einer derartigen Positionsmeßeinrichtung die aus den Abtastsignalen gebildeten Rechtecksignalfolgen synchronisiert werden.

Durch Störung kann am Eingang einer solchen Nachlaufschaltung gleichzeitig ein Vorwärts- und ein Rückwärtsimpuls auftreten. In diesem Fall werden beide Informationen auf den Ausgang der Nachlaufschaltung übertragen und verursachen einen Störimpuls.

Der Erfindung liegt die Aufgabe zugrunde, eine Schal tungsanordnung anzugeben, die fehlerhafte, d.h. unzulässige Bit-Muster von zulässigen Bit-Mustern unterscheiden kann und eine Weiterleitung unzulässiger Bit-Muster verhindert.

Diese Aufgabe wird von einer Schaltung mit den Merkmalen des Anspruchs 1 gelöst.

Die Unteransprüche geben Ausgangsschaltungen der Schaltungsanordnung an.

Die Vorteile der erfindungsgemäßen Schaltungsanordnung sind die zuverlässige Filterung von Bit-Mustern nach den Kriterien der Zulässigkeit bzw. Unzulässigkeit, die Sicherheit, daß nur die zulässigen Bit-Muster aus einer Vielzahl möglicher Bit-Muster passieren können und nicht zuletzt der einfache Aufbau.

Mit Hilfe eines Ausführungsbeispiels soll die Erfindung anhand der Zeichnungen noch näher erläutert werden.

Es zeigt:

Figur 1 eine Schaltungsanordnung zur Verarbeitung von Rechtecksignalfolgen;

Figur 2 ein Signaldiagramm.

Die Figur 1 zeigt eine sogenannte Nachlaufschaltung zum Synchronisieren von Signalfolgen mit einem digital arbeitenden Filter DF, das in einer derartigen Schaltung besonders vorteilhaft eingesetzt werden kann.

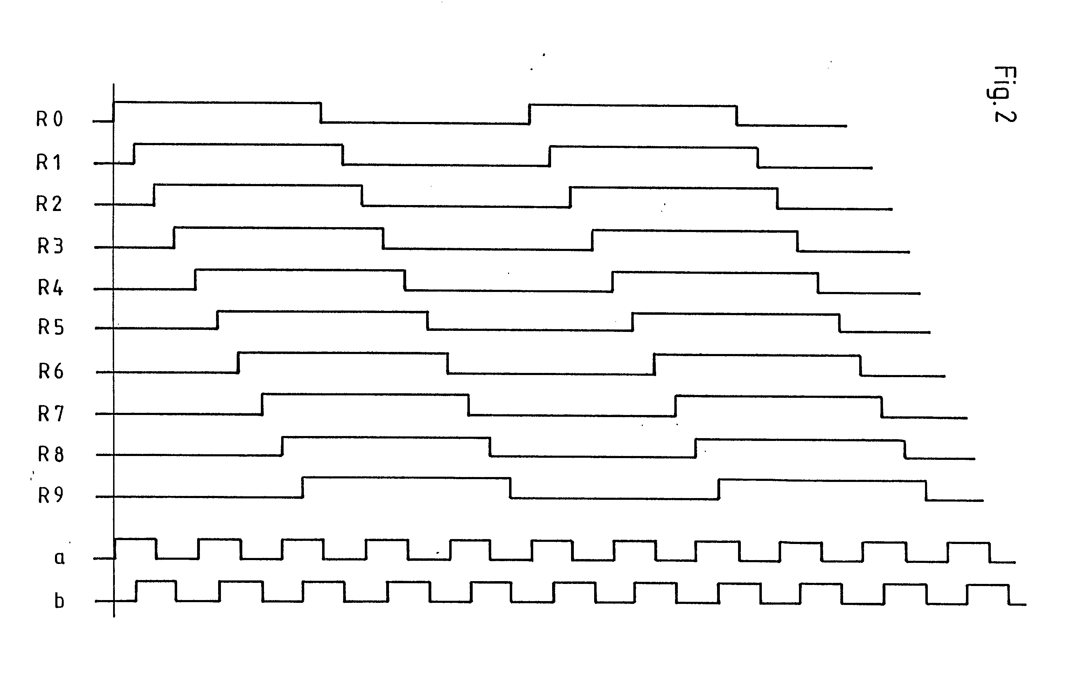

Vorab wird die Funktion der Synchronisierungs-Baueinheit 1 bei korrekter Abfolge von zueinander phasenverschobenen Rechtecksignalen R0 bis R9 erläutert (s.Fig. 2).

Die in Fig. 2 vorgestellten getriggerten Rechtecksignale R0 bis R9 liegen jeweils an Dateneingängen E0 bis E9 von bistabilen Kippstufen FF0 bis FF9. Ein Taktgenerator T speist die Takteingänge der jeweiligen Kippstufen FF0 bis FF9 mit einem Hilfssignal H, wobei zwischen den Taktgenerator T und einzelnen Takteingängen jeweils ein logisches Element in Form eines Oder-Gatters G0 bis G9 geschaltet ist. Die Oder-Gatter G0 bis G9 dienen zur Steuerung der Takteingänge der einzelnen Kippstufen FF0 bis FF9.

Die durch die Synchronisierungs-Baueinheit 1 synchronisierten Rechtecksignale liegen an Ausgängen A0 bis A9 der bistabilen Kippstufen FF0 bis FF9. Für die Synchronisierung des ersten und des letzten Rechtecksignals gelten besondere Verknüpfungsbedingungen, die später erläutert werden.

An jeweils einem Eingang der Oder-Gatter G1 bis G9 liegt, wie bereits beschrieben, das getakte Hilfssignal H des Taktgenerators T an, so daß die Aktivierung der bistabilen Kippstufen FF1 bis FF9 durch ihre Oder-gatter G1 bis G9 an ihren Takteingängen gesteuert wird.

Das Steuerverhalten des jeweiligen Oder-Gatters G1 bis G9 hängt jedoch wiederum vom getakteten Hilfssignal H ab und vom Signalzustand am Ausgang des zugehörigen Exclusiv-Oder-Gatters EX 1 bis EX9.

Die Signalzustände an den Ausgängen der Exclusiv-Oder-Gatter EX0 bis EX9 sind jeweils abhängig von den Zuständen der Signale an ihrem Eingang. Am Eingang der Exclusiv-Oder-Gatter EX1 bis EX8 liegen jeweils das invertierte Ausgangssignal $\overline{A_{i-1}}$ der vorhergehenden Kippstufe FFi-1 und das nicht invertierte Ausgangssignal Ai + 1 der nachfolgenden Kippstufe FFi + 1 an.

Zur Verdeutlichung soll das Schaltverhalten einer der genannten Kippstufen FFi genau erläutert werden:

Am Dateneingang E4 der Kippstufe FF4 liegt das Rechtecksignal R4 an. Das Signal am Eingang E4 wird auf den Ausgang A4 der Kippstufe FF4 durchgeschaltet, wenn eine Schaltflanke des vom Taktgenerator T gelieferten Hilfssignales H am Takteingang der Kippstufe FF4 anliegt. Allerdings liegt eine Schaltflanke des Hilfssignals H nur am Takteingang der Kippstufe FF4 an, wenn das Hilfssignal H das eingangsseitige Oder-Gatter G4 passieren kann. Dazu ist es erforderlich, daß der mit dem Exclusiv-Oder-Gatter EX4 verbundene Eingang des Oder-Gatters G4 den logischen Zustand "0" hat. An einem der Eingänge des Oder-Gatters G4 liegt also das Hilfssignal H des Taktgenerators T an, der zweite Eingang des Oder-Gatters G4 ist mit dem Ausgang des Exclusiv-Oder-Gatters EX4 verbunden. An einem der Eingänge des Exclusiv-Oder-Gatters EX4 liegt der invertierte Ausgang $\overline{A3}$ der vorhergehenden Kippstufe FF3 an, am anderen Eingang des Esclusiv-Oder-Gatters EX4 liegt der nichtinvertierte Ausgang A5 der nachfolgenden Kippstufe FF5 an.

Damit nun das Hilfssignal H des Taktgenerators T das am Dateneingang E4 der Kippstufe FF4 anliegende Rechtecksignal R4 auf den Ausgang A4 der Kippstufe FF4 durchschalten kann, müssen die Eingänge des Exclusiv-Oder-Gatters EX4 beide den gleichen logischen Zustand haben, d.h. beide müssen logisch "0" oder logisch "1" sein. In diesen Fällen hat der Ausgang des Exclusiv-Oder-Gatters EX4 den logischen Zustand "0", damit kann das Hilfssignal H des Taktgenerators T das Oder-Gatter G4 passieren, und die Kippstufe FF4 übernimmt mit einer Schaltflanke des Hilfssignals H des Taktgenerators T das am Dateneingang E4 anstehende Rechtecksignal R4 auf den Ausgang A4.

Auf diese Weise ist die Freigabe einer Änderung des Zustandes eines Ausgangssignals einer Kippstufe von den Signalzuständen der benachbarten synchronisierten Rechtecksignale an den Ausgängen $A_{i-1}$ und $A_{i+1}$ ihrer zugehörigen bistabilen Kippstufen $FF_{i-1}$ und $FF_{i+1}$ sowie vom Takt des Hilfssignals H abhängig und somit synchronisiert.

Um bei der Synchronisierung von Rechtecksignalen den sicheren Übergang von einer Signalperiode des unterteilten analogen Meßsignals zur nächsten (s. Fig. 2) zu gewährleisten, müssen die erste und die letzte Kippstufe FF0 und FF9 geringfügig anders über ihre zugehörigen Exclusiv-Oder-Gatter EX0 und EX9 zusammengeschaltet werden, da sie ja jeweils nur über die Nachbarkippstufe FF1 bzw. FF8 verfügen. Aus Fig. 1 ist leicht erkennbar, daß in diesem Fall das Exclusiv-Oder-Gatter EX0 der ersten Kippstufe FF0 vom nichtinvertierten Ausgang A1 der Kippstufe FF1 und vom nichtinvertierten Ausgang A9 der letzten Kippstufe FF9 beaufschlagt wird. Dementsprechend wird das Exclusiv-Oder-Gatter EX9 der letzten Kippstufe FF9 mit dem invertierten Ausgang $\overline{A8}$ der vorhergehenden Kippstufe FF8 und mit dem invertierten Ausgang $\overline{A0}$ der ersten Kippstufe FF0 beaufschlagt.

Die auf diese Weise synchronisierten Rechtecksignale R0 bis R9 werden über die Ausgänge A0 bis A9 der Synchronisierungs-Baueinheit 1 einer Verknüpfungsschaltung 2 zugeführt. Die in der Verkünpfungsschaltung 2 zusammmengefaßten Rechtecksignale R0 bis R9 sind in Fig. 2 als Rechtecksignal a und b angedeutet und zueinander um 90° phasenverschoben.

Die Abfolge der Rechtecksignale R0 bis R9 stellt - wenn man deren binären Zustände betrachtet - einen Code dar, der durch ein bestimmtes Bit-Muster definiert ist. Da die Synchronisierungs-Baueinheit 1 nicht erkennen kann, ob ihr Eingangscode zulässig ist, kommt es erst an den Ausgängen zur Erkennung, wenn die fehlerhaften Bit-Muster bereits verarbeitet worden sind und an den Ausgängen Wirkung zeigen.

Um dies zu vermeiden, ist der Synchronisierungs-Baueinheit 1 ein digital arbeitendes Filter DF vorgeschaltet. Das Filter DF besteht aus einem Adreßregister AR und einem Speicher S mit $2^n$ Speicherzellen Sn. Ein von den Rechtecksignalen R0 bis R9 momentan gebildetes Bit-Muster steht als Code am Eingang des Adreßregisters AR an. Das momentane Bit-Muster ist eines von $2^n$ möglichen Bit-Mustern, von denen lediglich 2n zulässig sind.

Beim Ausführungsbeispiel bedeutet dies konkret, daß $2^{10}$ Signalkombinationen - also 1024 verschiedene Bit-Muster - möglich sind, von denen lediglich 2 n also 20 Bit-Muster zulässig sind. Diese Gegenüberstellung macht deutlich, daß mit den verbleibenden 1004 nicht zulässigen Bit-Mustern die Fehlermöglichkeit recht hoch ist.

Jedem der möglichen $2^n$ Bit-Muster kann von dem Adreßregister AR eine bestimmte Speicherzelle Si zugeordnet werden, sodaß beim Vorliegen einer beliebigen Kombination von Rechtecksignalen R0 bis Rn diese Kombination - die einem bestimmten Bit-Muster entspricht - durch adressieren mittels des Adreßregisters AR eine bestimmte Speicherzelle Si angewählt ist. Die Speicherzelle Si enthält die Information, ob das an sie adressierte Bit-Muster zulässig ist, oder nicht zulässig ist. Abhängig von dieser Information, wird das momentan anliegende Bit-Muster im Falle der Zulässigkeit an die Synchronisierungs-Baueinheit 1 weitergeschaltet. Im Falle der Unzulässigkeit wird das Bit-Muster unterdrückt oder korrigiert und es besteht die Möglichkeit ein Fehlersignal auszugeben.

Der Taktgenerator T, dessen Hilfssignal H die Synchronisierungs-Baueinheit 1 taktet, taktet auch das Adreßregister AR.

## Ansprüche

1. Schaltungsanordnung zur Erkennung und/oder Unterdrückung von Störsignalen bei einer Abfolge von Rechtecksignalen, durch die $2^n$ Bit-Muster gebildet werden können, von denen 2 n Bit-Muster zulässig sind, dadurch gekennzeichnet, daß ein digital arbeitendes Filter (DF) vorgesehen ist, welches aus einem getakten Adreßregister (AR) und einem Speicher (S) mit $2^n$ adressierbaren Speicherzellen (Sm) besteht, wobei durch die Abfolge der Rechtecksignale (RO..Rk) jeweils eines von $2^n$ Bit-Muster am Eingang des Adreßregisters (AR) ansteht und mit diesem die zugehörige Speicherzelle (Si) des Speichers (S) angewählt wird, und daß die jeweilige Speicherzelle (Si) die Information enthält, ob das anliegende Bit-Muster (RO...Rk) zulässig oder unzulässig ist.

2. Schaltungsanordnung nach Anspruch 1, dadurch gekennzeichnet, daß das Adreßregister (AR) durch einen Taktgenerator (T) getaktet wird, dessen Hilfssignal (H) auch eine Synchronisierungs-Baueinheit (1) zur Synchronisierung der Rechtecksignale (RO...Rk) taktet.

3. Schaltungsanordnung nach Anspruch 1 und Anspruch 2 dadurch gekennzeichnet, daß der Speicher (S) ein Fehlersignal (F) liefert mit dessen Hilfe Störungen signalisiert und/oder die Eingänge (EO...Ek) der Synchronisierungs-Baueinheit (1) gesperrt werden können.

Fig.1

EP 0 329 125 A2

Fig. 2

R0 R1 R2 R3 R4 R5 R6 R7 R8 R9 a b